# EUROPEAN PATENT SPECIFICATION

(11) **EP 3 115 620 B1**
(45) Date of publication and mention of the grant of the patent: **03.10.2018**
(21) Application number: 15796490.9
(22) Date of filing: 20.03.2015
(51) Int. Cl.: F15B 15/14, F16F 9/32, F16F 9/34

(54) **CYLINDER DEVICE**
ZYLINDERVORRICHTUNG
DISPOSITIF DE CYLINDRE

(30) Priority: 23.05.2014 JP 2014106892
(43) Date of publication of application: 11.01.2017
(73) Proprietor: KYB Corporation, Tokyo 105-6111 (JP)
(72) Inventor: OGAWA, Takayuki, Tokyo 105-6111 (JP)
(74) Representative: Müller-Boré & Partner Patentanwälte PartG mbB
(86) International application number: PCT/JP2015/058423
(87) International publication number: WO 2015/178089

(56) References cited:
- EP-A1- 3 106 708
- EP-A1- 3 211 263
- FR-A- 1 281 050
- JP-A- H0 754 899
- JP-A- H10 169 695
- JP-A- 2008 025 694
- JP-A- 2009 287 666
- JP-A- 2009 287 666
- JP-A- 2012 013 119

## Description

### Technical Field

The present invention relates to a cylinder device.

### Background Art

JP 2008 025694 A discloses a damper which is a conventional cylinder device. The damper includes a cylinder, a piston, a piston rod, an external cylinder, a cover member, a rod guide, a tank and a communication passage. The piston is slidably inserted into the cylinder. The piston divides an interior of the cylinder into a rod-side chamber and a piston-side chamber. The piston rod is coupled to the piston. This damper is of a double cylinder type, and the external cylinder thereof is located outside the cylinder. The cover member closes one end of the cylinder and one end of the external cylinder. The rod guide is formed with a through-hole through which the piston rod is inserted. The rod guide closes the other ends of the cylinder and the external cylinder. The tank is formed in a space between the cylinder and the external cylinder. The tank stores an operating oil. The communication passage communicates between the piston-side chamber and the rod-side chamber. The communication passage includes a first passage, a second passage and an interconnecting passage. The first passage is provided in the cover member. The first passage has two ends one of which communicates with the piston-side chamber and the other of which is formed with a first communication hole facing the tank. The second passage is provided in the rod guide. The second passage has two ends one of which communicates with the rod-side chamber and the other of which is formed with a second communication hole facing the tank. The interconnecting passage comprises piping which interconnects the first communication passage and the second communication passage. The piping has both ends inserted into the first communication hole and the second communication hole respectively thereby to interconnect the first and second communication holes. The piping is disposed in the tank. The damper includes packings interposed between both ends of the piping and the first and second communication holes respectively thereby to ensure watertightness. Since the piping through which the operating oil flows is disposed in the tank formed in the space between the cylinder and the external cylinder, the piping can be prevented from being damaged by stepping stones when the damper is disposed between a body and a truck of a railroad vehicle or in another case.

Furthermore, JP 2010 065797 A discloses another conventional cylinder device in Figure 4. This cylinder device includes a double cylinder type damper, a supply passage, a pump, a first passage, a first on-off valve, a second passage and a second on-off valve. The tank of the cylinder device is filled with a fluid such as an operating oil, and a gas. The supply passage communicates between the tank and the rod-side chamber. The pump is provided in the middle of the supply passage. The first passage communicates between the rod-side chamber and the piston-side chamber. The first on-off valve is provided in the middle of the first passage. The second passage communicates between the piston-side chamber and the tank. The second on-off valve is provided in the middle of the second passage. In this cylinder device, the first on-off valve and the second on-off valve are on-off controlled while the pump is driven, so that the pressure in the rod-side chamber is regulated with the result that a thrust force can be controlled so as to take a desirable value.

### Summary of the Invention

### Problem to Be Overcome By the Invention

However, when the damper of JP 2008 025694 A is used as a vibration control device disposed between a body and a truck of a railroad vehicle, vibration axially reciprocates the piping disposed in the tank. Accordingly, the packings interposed between both ends of the piping and the first and second communication holes respectively are worn away due to a long-term use with the result of possible damage in the watertightness. Furthermore, even when the damper disclosed by JP 2008 025694 A is applied to the cylinder device of JP 2010 065797 A, the long-term use of the packings also results in possible damage in the watertightness between both ends of the piping and the first and second communication holes respectively.

The present invention was made in view of the above-described circumstances in the conventional art and an object thereof is to provide a cylinder device which can be used successfully over a long period of time.

FR 1 281 050 A discloses a telescopic hydraulic shock absorber comprising a piston which works in a pressure cylinder and one-way valve arrangements in a plug for the cylinder and the piston respectively which cause the hydraulic fluid to flow unidirectionally, in a continuous closed circuit, through the piston and the cylinder and a concentric reservoir, defined by an outer cylinder and the cylinder, and from the reservoir back into the cylinder the fluid circuit also including a flow-restricting or metering valve.

JP 2009 287666 A discloses a horizontal cylinder device comprising an oscillating pipe provided in an opening on the side of the reserver chamber of a radial passage configuring an oil passage and an oscillating pipe provided connected to an annular passage are provided with weights at chip ends of a suction pipe and a discharge pipe capable of oscillating in upper and lower directions with oscillating joints as the centers. In the oscillating pipes as the chip end sides of the suction pipe and the discharge pipe that are free ends are oscillated downward by their own weights of the weights the chip ends of the suction pipe and the discharge pipe can be disposed in the oil liquid accumulated at the lower side in the reserver chamber.

### Means for Overcoming the Problem

A cylinder device according to the present invention is defined in claim 1. The cylinder device includes a cylinder, a piston, an external cylinder, a tank and piping. The piston is slidably inserted into the cylinder. The piston divides an interior of the cylinder into a rod-side chamber and a piston-side chamber. The external cylinder is disposed outside the cylinder and covers the cylinder. The tank is formed in a space between the cylinder and the external cylinder and stores an operating fluid. The piping constitutes part of a passage through which the operating fluid passes when the operating fluid is supplied into and discharged from the rod-side chamber or the piston-side chamber. The piping has two ends one of which has a larger outer diameter than the other end. The piping is disposed in the tank.

The cylinder device includes the piping formed to have one end with the larger outer diameter than the other end. The one end of the piping has a pressure-receiving area which receives pressure from the operating fluid in the passage and which is larger than a pressure-receiving area of the other end of the piping. Accordingly, when the piping receives pressure of the operating fluid in the passage, a force acting in a direction from the one end toward the other end prevails, so that the piping is moved to the other end side and the cylinder device is maintained in this state. Thus, even when the cylinder device is vibrated, the piping is not axially reciprocated but is maintained in the state where the piping has been moved to the other end side, with the result that connections of both ends of the piping can be prevented from damage of the watertightness due to wear.

Accordingly, the cylinder device according to the present invention can be used successfully over a long period of time.

### Brief Description of the Drawings

Fig. 1 is a circuit diagram of a cylinder device of a first embodiment;
Fig. 2 is a sectional view showing a relevant part of the first embodiment;
Fig. 3 is a side elevation of the cylinder device of the first embodiment;
Fig. 4 is a sectional view taken along line X-X in Fig. 3;
Fig. 5 is a circuit diagram of the cylinder device of a second embodiment; and
Fig. 6 is a circuit diagram of a damper of a third embodiment.

### Mode for Carrying Out the Invention

First to third embodiments of the cylinder device according to the present invention will be described with reference to the accompanying drawings.

### First Embodiment

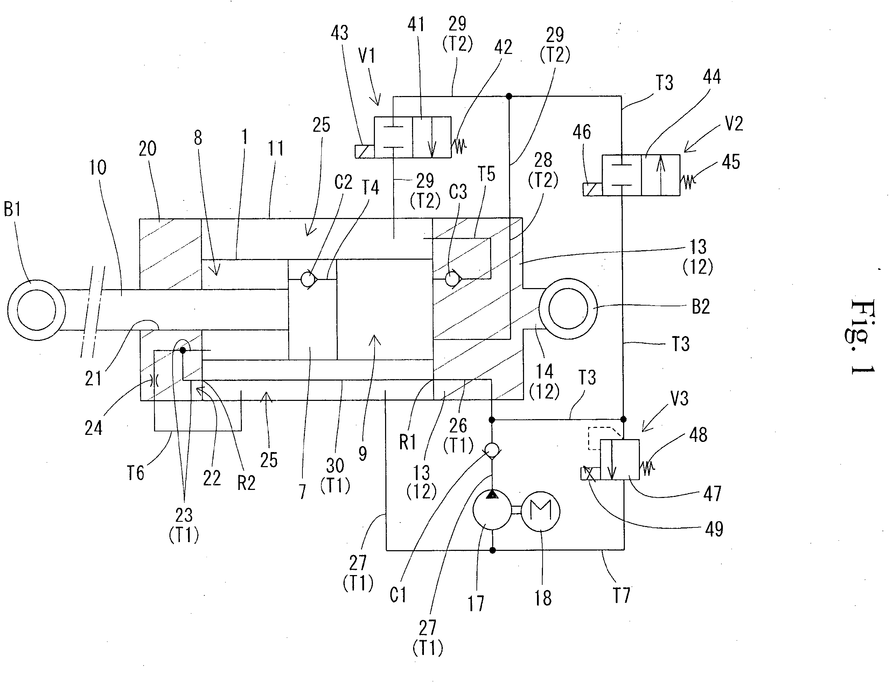

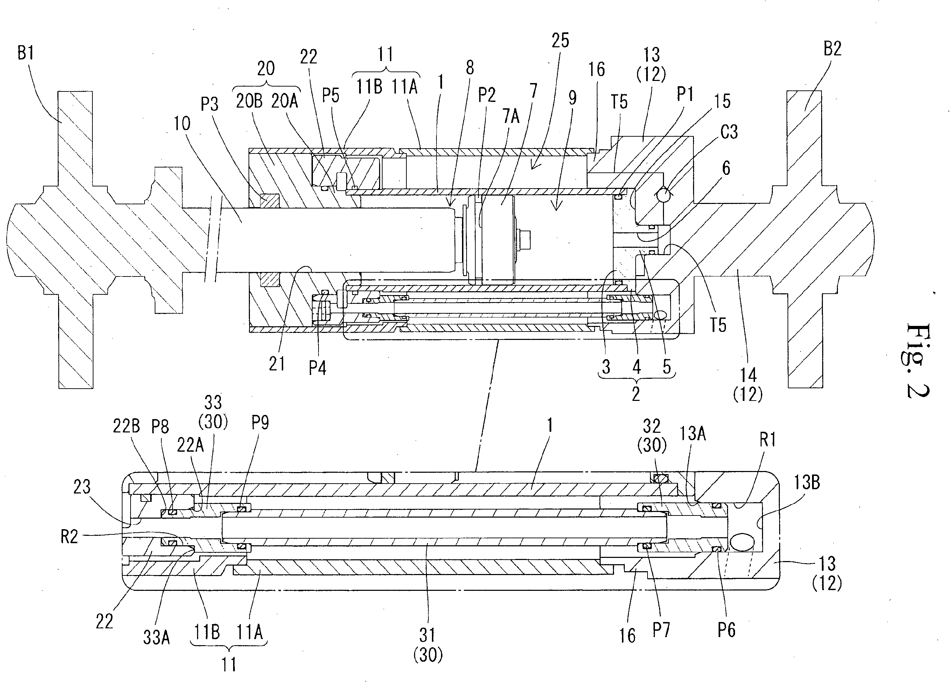

The cylinder device of the first embodiment includes a cylinder 1, a piston 7, a piston rod 10, an external cylinder 11, a cover member 12, a rod guide 20, a flow passage forming member 22 (see Fig. 2), a tank 25, a pump 17, a first check valve C1, a first on-off valve (serving as an on-off valve) V1 and first piping 30, as shown in Figs. 1 and 2. The cylinder device also includes a second on-off valve V2, a second check valve C2, an orifice 24, a third check valve C3 and a relief valve V3. Furthermore, the cylinder device is formed with a first passage T1, a second passage T2, a third passage T3, a fourth passage T4, a fifth passage T5, a sixth passage T6 and a discharge passage T7 all serving as passages through which an operating fluid passes.

The cylinder 1 has a cylindrical shape. As shown in Fig. 2, the cylinder 1 has two ends, to one of which a distal end member 2 is attached (in the following description, a right end of the cylinder 1 as viewed in Fig. 2 will be referred to as "one end (of the cylinder 1)" and a left end of the cylinder 1 as viewed in Fig. 2 will be referred to as "the other end (of the cylinder 1) ") . The distal end member 2 has an insertion portion 3, a flange 4 and a protrusion 5. The insertion portion 3 is formed into a disc shape and has an outer diameter that is slightly smaller than an inner diameter of the cylinder 1. The flange 4 is formed to be continuous from the insertion portion 3 and has a disc shape. The flange 4 has an outer diameter that is equal to an outer diameter of the cylinder 1. The flange 4 is locked in engagement with the end of the cylinder 1 while the insertion portion 3 is inserted into the cylinder 1. The protrusion 5 has a cylindrical shape and protrudes from a central part of the flange 4. The distal end member 2 has a flow passage 6 extending through central parts of the insertion portion 3, the flange 4 and the protrusion 5. The insertion portion 3 has a single groove formed in an outer periphery thereof over a whole circumference, and a packing P1 is fitted in the groove. As a result, the distal end member 2 is inserted into the end of the cylinder 1 in a watertight state.

The piston 7 is formed into a substantially columnar shape and has an outer diameter that is slightly smaller than the inner diameter of the cylinder 1. The piston 7 has a single groove 7A formed in an outer periphery thereof over a whole circumference, and a packing P2 is fitted in the groove 7A. The piston 7 is slidably inserted into the cylinder 1 thereby to divide an interior of the cylinder 1 into a rod-side chamber 8 and a piston-side chamber 9. The rod-side chamber 8 and the piston-side chamber 9 are filled with an operating oil serving as the operating fluid. The piston 7 is formed with the fourth passage T4 communicating between the piston-side chamber 9 and the rod-side chamber 8, as shown in Fig. 1. The fourth passage T4 is provided with the second check valve C2 located in the middle thereof. The second check valve C2 allows the operating oil to flow from the piston-side chamber 9 to the rod-side chamber 8 and prevents the operating oil from flowing from the rod-side chamber 8 to the piston-side chamber 9.

As shown in Figs. 1 and 2, the piston rod 10 is formed into a columnar shape and has two ends, one of which extends through a central part of the piston 7 to be coupled to the piston 7 (in the following description, a right end of the piston rod 10 as viewed in Fig. 2 will be referred to as "one end (of the piston rod 10)" and a left end of the piston rod 10 as viewed in Fig. 2 will be referred to as "the other end (of the piston rod 10) ") . The piston rod 10 is provided with a bracket B1 which is formed on the other end thereof in order that the cylinder device may be mounted on a railroad vehicle or the like.

The external cylinder 11 is constructed of a first external cylinder 11A and a second external cylinder 11B coupled to the first external cylinder 11A, as shown in Fig. 2. The first external cylinder 11A is formed into a cylindrical shape and has constant inner and outer diameters. The second external cylinder 11B has one end having an outer diameter reduced so as to be slightly smaller than the inner diameter of the first external cylinder 11A. The one end of the second external cylinder 11B is inserted into the first external cylinder 11A to be connected to the first external cylinder 11A by welding (in the following description, the right end of the second external cylinder 11B as viewed in Fig. 2 will be referred to as "one end (of the second external cylinder 11B) and the left end of the second external cylinder 11B as viewed in Fig. 2 will be referred to as "the other end (of the second external cylinder 11B)"). The second external cylinder 11B has an inner diameter and an outer diameter both of which are equal to those of the first external cylinder 11A except for the reduced portion thereof, respectively. The external cylinder 11 is located outside the cylinder 1 and disposed to be coaxial with the cylinder 1.

The cover member 12 has a cover body 13, a connection 14 and a bracket B2. The cover body 13 is formed with a recess 15 into which the one end of the cylinder 1 is inserted. The recess 15 has a circular section perpendicular to a depthwise direction (in the right-left direction as viewed in Fig. 2) and has an inner diameter that is slightly larger than the outer diameter of the cylinder 1. The recess 15 has a central bottom in which the fifth passage T5 is open. The protrusion 5 of the distal member attached to the cylinder 1 is fitted in the fifth passage T5. The fifth passage T5 communicates with the tank 25 which will be described later. More specifically, the fifth passage T5 communicates between the piston-side chamber 9 and the tank 25. The fifth passage T5 has the third check valve C3 provided in the middle thereof. The third check valve C3 allows the operating oil to flow from the tank 25 to the piston-side chamber 9 and prevents the operating oil from flowing from the piston-side chamber 9 to the tank 25.

An outer peripheral wall 16 defining the recess 15 of the cover body 13 is formed into a substantially cylindrical shape. The outer peripheral wall 16 has a distal end inserted between the one end of the external cylinder 11 and the one end of the cylinder 1. The cover body 13 and the external cylinder 11 are connected together by welding. More specifically, the one end of the cylinder 1 and the one end of the external cylinder 11 are closed by the cover body 13. The cover body 13 is formed with a first communication hole R1 into which one end of the first piping 30 is inserted (in the following description, a right end of the first piping 30 as viewed in Fig. 2 will be referred to as "one end (of the first piping 30)" and a left end of the first piping 30 will be referred to as "the other end (of the first piping 30)"). The first piping 30 will be described later. The first communication hole R1 communicates with the externally provided pump 17 via a passage formed in the cover body 13 (see Fig. 1) . The connection 14 extends from a central part of a side of the cover body 13 located opposite the cylinder 1. The bracket B2 is provided on a distal end of the connection 14 and used for the cylinder device to be mounted on the railroad vehicle or the like.

The rod guide 20 has a first annular portion 20A and a second annular portion 20B formed to be continuous from the first annular portion 20A. Each of the first and second annular portions 20A and 20B is formed into a substantially cylindrical shape and has a centrally extending through-hole 21. The first annular portion 20A has a smaller outer diameter than the second annular portion 20B. The piston rod 10 is inserted through the through-hole 21. The first annular portion 20A has a distal end which has an outer diameter slightly smaller than the inner diameter of the cylinder 1 and which is inserted into the other end of the cylinder 1. The second annular portion 20B has an outer diameter slightly smaller than the inner diameter of the external cylinder 11 and is inserted into the second external cylinder 11B. The other ends of the cylinder 1 and the external cylinder 11 are thus closed by the rod guide 20. The second annular portion 20B has a single groove formed in an inner periphery of the through-hole 21 over a whole circumference, and the packing P3 is fitted in the groove. As a result, the piston rod 10 is slidably inserted into the through-hole 21 of the rod guide 20 in a watertight state.

The flow passage forming member 22 is formed into a substantially cylindrical shape. The flow passage forming member 22 has an inner periphery abutting against an outer periphery of the first annular portion 20A of the rod guide 20 and an outer periphery of the other end of the cylinder 1. The flow passage forming member 22 has an outer periphery abutting against the inner periphery of the external cylinder 11. The flow passage forming member 22 is fitted onto the first annular portion 20A of the rod guide 20 and the other end of the cylinder 1 and is housed in the external cylinder 11. More specifically, the flow passage forming member 22 is provided between the cylinder 1 and the external cylinder 11. The rod guide 20 has a single groove formed in an outer periphery of the first annular portion 20A over a whole circumference, and the packing P4 is fitted in the groove. As a result, the flow passage forming member 22 and the rod guide 20 are fitted with each other in a watertight state. Furthermore, the flow passage forming member 22 includes a part abutting against the outer periphery of the cylinder 1, and the part has a single groove formed in an inner periphery thereof over a whole circumference. A packing P5 is fitted in the groove. As a result, the flow passage forming member 22 and the cylinder 1 are fitted with each other in a watertight state.

The flow passage forming member 22 is formed with a second communication hole R2 into which is inserted the other end of the first piping 30 which will be described later. The second communication hole R2 communicates with the rod-side chamber 8 via a passage 23 formed in the flow passage forming member 22. The sixth passage T6 diverging from the passage 23 communicating between the second communication hole R2 and the rod-side chamber 8 is formed inside the flow passage forming member 22, as shown in Fig. 1. The orifice 24 is provided in the middle of the sixth passage T6. The sixth passage T6 communicates between the rod-side chamber 8 and the tank 25.

The tank 25 is surrounded by the cylinder 1, the external cylinder 11, the cover member 12 and the flow passage forming member 22 and stores the operating oil, as shown in Fig. 2. More specifically, the tank 25 is formed in a space between the cylinder 1 and the external cylinder 11. The tank 25 is filled with a gas as well as the operating oil.

The first piping 30 has a piping body 31, a first insertion member 32 and a second insertion member 33. The piping body 31 extends in a straight line and has constant inner and outer diameters. The first insertion member 32 has one end inserted into the first communication hole R1 (in the following description, a right end of the first insertion member 32 as viewed in Fig. 2 will be referred to as "one end (of the first insertion member 32) " and a left end of the first insertion member 32 as viewed in Fig. 2 will be referred to as "the other end (of the first insertion member 32)"). Furthermore, the first insertion member 32 has the other end into which one end of the piping body 31 is inserted thereby to be coupled to the piping body 31 (in the following description, a right end of the piping body 31 as viewed in Fig. 2 will be referred to as "one end (of the piping body 31) " and a left end of the piping body 31 as viewed in Fig. 2 will be referred to as "the other end (of the piping body 31)"). The first insertion member 32 has an annular outline that is larger than an outer diameter of the piping body 31. The first insertion member 32 has a constant outer diameter over a whole length thereof. The first insertion member 32 has a single groove formed in an outer periphery of the one end thereof over a whole circumference, and a packing P6 is fitted in the groove. As a result, the first insertion member 32 is inserted into the first communication hole R1 in a watertight state. The first insertion member 32 also has a single groove formed in an inner periphery of the other end thereof over a whole circumference, and the packing P7 is fitted in the groove. As a result, the first insertion member 32 is coupled to the piping body 31 in a watertight state.

The other end of the piping body 31 is inserted into the one end of the second insertion member 33, so that the second insertion member 33 is coupled to the piping body 31 (in the following description, a right end of the second insertion member 33 as viewed in Fig. 2 will be referred to as "one end of the second insertion member 33") and a left end of the second insertion member 33 as viewed in Fig. 2 will be referred to as "one end (of the second insertion member 33)"). Furthermore, the other end of the second insertion member 33 is inserted into the second communication hole R2. The one end of the second insertion member 33 has an outer diameter that is substantially equal to the outer diameter of the first insertion member 32, and the other end of the second insertion member 33 has an outer diameter that is smaller than the outer diameter of the first insertion member 32. More specifically, the first piping 30 is formed so that its end to which the first insertion member 32 is coupled has a larger outer diameter than its end to which the second insertion member 33 is coupled. Furthermore, the one end of the second insertion member 33 has a larger outer diameter than the other end thereof and is formed with a stepped portion 33A. The stepped portion 33A serves as an abutting portion which abuts against an end surface of the flow passage forming member 22 forming an open end 22A of the second communication hole R2 when the second insertion member 33 is inserted into the second communication hole R2.

The second insertion member 33 has a single groove formed in an outer periphery of the other end thereof over a whole circumference, and the packing P8 is fitted in the groove. As a result, the second insertion member 33 is inserted into the second communication hole R2 in a watertight state. The second insertion member 33 also has a single groove formed in an inner periphery of the one end thereof over a whole circumference, and a packing P9 is fitted in the groove. As a result, the second insertion member 33 is coupled to the piping body 31 in a watertight state.

In view of tolerances and assembly errors of the parts, the first piping 30 is formed so as to be shorter than a distance between an inner end surface 13B of the first communication hole R1 and an inner end surface 22B of the second communication hole R2 and so as to be longer than a distance between an open end 13A of the first communication hole R1 and an open end 22A of the second communication hole R2. As a result, the first piping 30 is axially movable while the first insertion member 32 is inserted into the first communication hole R1 and the second insertion member 33 is inserted into the second communication hole R2. The first piping 30 is thus disposed in the tank 25 while the one end thereof is inserted into the first communication hole R1 formed in the cover body 13 of the cover member 12 and the other end thereof is inserted into the second communication hole R2 formed in the flow passage forming member 22.

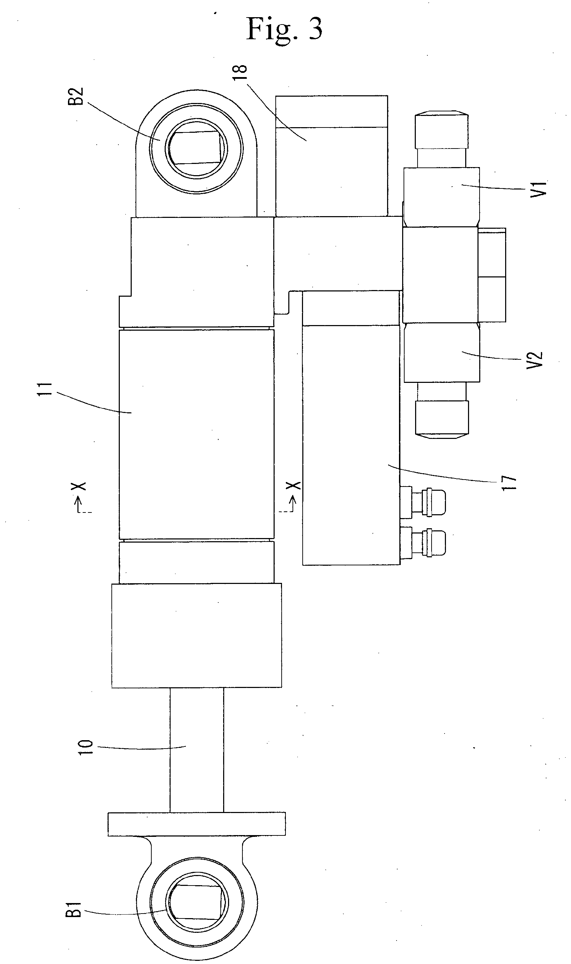

The first passage T1 communicates between the tank 25 and the rod-side chamber 8 as shown in Fig. 1. The first passage T1 includes a part which is constructed of the first piping 30. The first passage T1 has a passage 26 and an external passage 27. The passage 26 is formed in the cover body 13 of the cover member 12. The passage 26 communicates with the first communication hole R1 and is open to the outside. The external passage 27 communicates between the tank 25 and the passage 26. The pump 17 is provided in the external passage 27 of the first passage T1 and is disposed outside the cover member 12 (see Figs. 1 and 3) . The pump 17 is driven by a motor 18 and can feed the operating oil from the tank 25 to the rod-side chamber 8. The first check valve C1 is provided in the external passage 27 located at the downstream side of the pump 17. The first check valve C1 allows the operating oil to flow in the first passage T1 from the tank 25 toward the rod-side chamber 8 and prevents the operating oil from flowing from the rod-side chamber 8 toward the tank 25.

The second passage T2 communicates between the piston-side chamber 9 and the tank 25. The second passage 9 has a passage 28 and an external passage 29. The passage 28 is formed inside the cover body 13 of the cover member 12. The passage 28 communicates with the piston-side chamber 9 and is open to the outside. The external passage 29 communicates between the tank 25 and the passage 28. The first on-off valve V1 is provided in the external passage 29 of the second passage T2 and disposed outside the cover member 12 (see Figs. 1 and 3) . The first on-off valve V1 is an electromagnetic on-off valve and has a valve 41 opening/closing the second passage T2, a spring imparting an elastic force on the valve 41 in a direction such that the valve 42 is opened, and a solenoid 43 imparting a thrust force on the valve 41 in a direction such that the valve 41 is closed.

The third passage T3 diverges from the external passage 27 of the first passage T1 at the downstream side of the first check valve C1 provided in the external passage 27 and joins the external passage 29 of the second passage T2 located at the upstream side of the first on-off valve V1 provided in the external passage 29. The second on-off valve V2 is provided in the middle of the third passage T3 and disposed outside the cover member 12 (see Figs. 1 and 3) . The second on-off valve V2 is an electromagnetic on-off valve and has a valve 44 opening/closing the third passage T3, a spring 45 imparting an elastic force on the valve 44 in a direction such that the valve 44 is opened, and a solenoid 46 imparting a thrust force on the valve 44 in a direction such that the valve 44 is closed.

The discharge passage T7 diverges from the third passage T3 at the upstream side of the second on-off valve V2 provided in the third passage T3 and joins the external passage 27 of the first passage T1 at the upstream side of the pump 17 provided in the external passage 27. More specifically, the discharge passage T7 is coupled to the external passage 27 so as to bypass the pump 17 and the first check valve C1 both of which are provided in the external passage 27 of the first passage T1. The relief valve V3 is provided in the discharge passage T7. The relief valve V3 is a proportional electromagnetic relief valve and has a valve 47 opening/closing the discharge passage T7, a spring 48 imparting an elastic force on the valve 47 in a direction such that the valve 47 is closed, and a proportional solenoid 49 imparting a thrust force on the valve 47 in a direction such that the valve 47 is opened. A valve opening pressure of the relief valve V3 can be regulated by adjusting an amount of electric current flowing into the proportional solenoid 49. More specifically, when a pressure in the rod-side chamber 8 exceeds the valve opening pressure, a resultant force of a thrust force resulting from the pressure and a thrust force of the proportional solenoid 49 overcomes the elastic force of the spring 48 imparted in the direction such that the valve 47 is closed, with the result that the relief valve V3 opens the discharge passage T7. The valve opening pressure of the relief valve V3 becomes minimum when an amount of electric current supplied to the proportional solenoid 49 is rendered maximum. The valve opening pressure of the relief valve V3 becomes maximum when no electric current is supplied to the proportional solenoid 49.

The above-described cylinder device can deaerate the cylinder 1 as will be described below.

The first on-off valve V1, the second on-off valve V2 and the relief valve V3 of the cylinder device are closed. The cylinder device is then driven to be expanded/contracted in the aforementioned state. When the cylinder device is driven in this manner, the operating oil is circulated through the rod-side chamber 8, the sixth passage T6, the tank 25, the fifth passage T5, the piston-side chamber 9, the fourth passage T4 and the rod-side chamber 8 in this order. As a result, the operating oil in which a gas is possibly mixed is discharged into the tank 25 and the operating oil in which a gas is not possibly mixed can be suctioned into the cylinder 1. Thus, the cylinder device can deaerate the cylinder 1. Air in the rod-side chamber 8 is led into the tank 25 via the orifice 24 formed to be located at an upper part of the cylinder device. Accordingly, when the cylinder device is caused to function as an actuator or a damper, the orifice 24 serves as a resistance to limit an amount of operating oil passing through the sixth passage T6 thereby to limit an amount of operating oil passing through the sixth passage T6 to a large extent, with the result that loss of the operating oil passing through the sixth passage T6 can be rendered minimum.

Furthermore, this cylinder device can function as a damper as will be described below.

The first on-off valve V1 and the second on-off valve V2 of the cylinder device are closed. Then, the fourth passage T4, the first passage T1 by way of the discharge passage T7, and the fifth passage T5 cause the rod-side chamber 8, the tank 25 and the piston-side chamber 9 to communicate with one another in a row.

The fourth passage T4, the discharge passage T7 and the fifth passage T5 of the cylinder device are set so that the operating oil flows in one direction through these passages. Accordingly, when an external force expands the cylinder device, the operating oil in the cylinder 1 is returned through the fourth passage T4 and the first passage T1 by way of the discharge passage T7 into the tank 25. Furthermore, a shortage of the operating oil in the cylinder 1 is supplied from the tank 25 to the cylinder 1 through the fifth passage T5. Furthermore, when an external force contracts the cylinder device, an amount of operating oil corresponding to the forward movement of the piston rod 10 is returned through the first passage T1 by way of the discharge passage T7 into the tank 25. Thus, when an external force expands/contracts the cylinder device, the relief valve V3 serves as a resistance against the operating oil flowing in the discharge passage T7, thereby functioning as a pressure control valve regulating the pressure in the cylinder 1 to a valve-opening pressure. Consequently, the cylinder device functions as a damper.

This cylinder device can further generate a desired thrust force in an expansion direction as will be explained below.

The first on-off valve V1 of the cylinder device is closed, and the second on-off valve V2 is opened. The motor 18 is then rotated at a predetermined rotation speed according to the expanded/contracted state of the cylinder device thereby to drive the pump 17, so that the operating oil is supplied from the tank 25 into the cylinder 1. Thus, when the operating oil is supplied while the rod-side chamber 8 is in communication with the piston-side chamber 9, the piston 7 is pressed toward the rod-side chamber 8 (leftward as viewed in Fig. 1), thereby exerting a thrust force in the expansion direction. When the pressures in the rod-side chamber 8 and the piston-side chamber 9 exceed the valve opening pressure of the relief valve V3, the relief valve V3 is opened with the result that the operating oil is returned through the discharge passage T7 and the external passage 27 into the tank 25. The pressures in the rod-side chamber 8 and the piston-side chamber 9 thus correspond to the valve opening pressure of the relief valve V3 in the cylinder device. More specifically, the pressures in the rod-side chamber 8 and the piston-side chamber 9 can be controlled by an amount of electric current supplied to the relief valve V3. Consequently, the cylinder device can exert a thrust force in the expansion direction, which thrust force has a value obtained by multiplying a difference between pressure-receiving areas of the piston-side and rod-side chambers 9 and 8 of the piston 7 by pressures in the rod-side and piston-side chambers 8 and 9 controlled on the basis of an amount of electric current supplied to the relief valve V3 respectively.

This cylinder device can exert a desired thrust force in a contraction direction as will be explained below.

The first on-off valve V1 of the cylinder device is opened, and the second on-off valve V2 is closed. The motor 31 is then rotated at a predetermined rotation speed according to the expanded/contracted state of the cylinder device thereby to drive the pump 17, so that the operating oil is supplied from the tank 25 into the rod-side chamber 8. Thus, the piston 7 is pressed toward the piston-side chamber 9 (rightward as viewed in Fig. 1) when the operating oil is supplied from the tank 25 into the rod-side chamber 8 while the piston-side chamber 9 and the tank 25 are in communication with each other through the second passage T2. As a result, the cylinder device exerts a thrust force in the contraction direction. As described above, the cylinder device can control the pressure in the rod-side chamber 8 on the basis of an amount of electric current supplied to the relief valve V3. Consequently, the cylinder device can exert a thrust force in the contraction direction, which thrust force has a value obtained by multiplying the pressure-receiving area at the rod-side chamber 8 side in the piston 7 by the pressure in the rod-side chamber 8 controlled by an amount of electric current supplied to the relief valve V3.

This cylinder device includes the cylinder 1, the piston 7, the external cylinder 11, the tank 25 and the first piping 30. The piston 7 is slidably inserted into the cylinder 1. The piston 7 divides the interior of the cylinder 1 into the rod-side chamber 8 and the piston-side chamber 9. The external cylinder 11 is disposed outside the cylinder 1 and covers the cylinder 1. The tank 25 is formed in the space between the cylinder 1 and the external cylinder 11 and stores the operating oil. The first piping 30 constitutes part of the first passage T1 through which the operating fluid supplied into and discharged from the rod-side chamber 8 passes. The first piping 30 has one end to which the first insertion member 32 is coupled and the other end to which the second insertion member 33 is coupled. The one end of the first piping 30 has a larger outer diameter than the other end of the first piping 30. The first piping 30 is disposed in the tank 25.

This cylinder device includes the first piping 30 having the one end to which the first insertion member 32 is coupled and the other end to which the second insertion member 33 is coupled. The one end of the first piping 30 has a larger outer diameter than the other end of the first piping 30. More specifically, the first piping 30 which constitutes part of the first passage T1 receives pressure of the operating oil filling the first passage T1. The one end of the first piping 30 to which the first insertion member 32 is coupled has a larger pressure-receiving area than the other end of the first piping 30 to which the second insertion member 33 is coupled. As a result, when the first piping 30 receives pressure of the operating oil in the first passage T1, a force from the first insertion member 32 toward the second insertion member 33 prevails, so that the operating oil is moved to the second insertion member 33 side. The first piping 30 is maintained in the state where the stepped portion 33A (the abutment portion) of the second insertion member 33 is in abutment against an end surface of the flow passage forming member 22 forming the open end 22A of the second communication hole R2. Thus, since the first piping 30 is not axially reciprocated even when the cylinder device is vibrated, connections between both ends of the first piping 30 and the respective first and second communication holes R1 and R2 can be prevented from damage of watertightness due to wear.

Accordingly, the cylinder device of the first embodiment can be used successfully over a long period of time.

Furthermore, the first piping 30 has the piping body 31, the first insertion member 32 and the second insertion member 33. The piping body 31 extends in a straight line and has constant inner and outer diameters. The first insertion member 32 is coupled to the one end of the piping body 31. The second insertion member 33 is coupled to the other end of the piping body 31. The first and second insertion members 32 and 33 have respective larger outer diameters than the piping body 31. Furthermore, the diameter of the first insertion member 32 is larger than the outer diameter of the second insertion member 33. The piping body 31 can be rendered narrower by constructing the first piping 30 in this manner. As a result, the space between the external cylinder 11 and the cylinder 1 is rendered smaller, whereby the external cylinder 11 is rendered narrower, with the result that the cylinder device can be downsized.

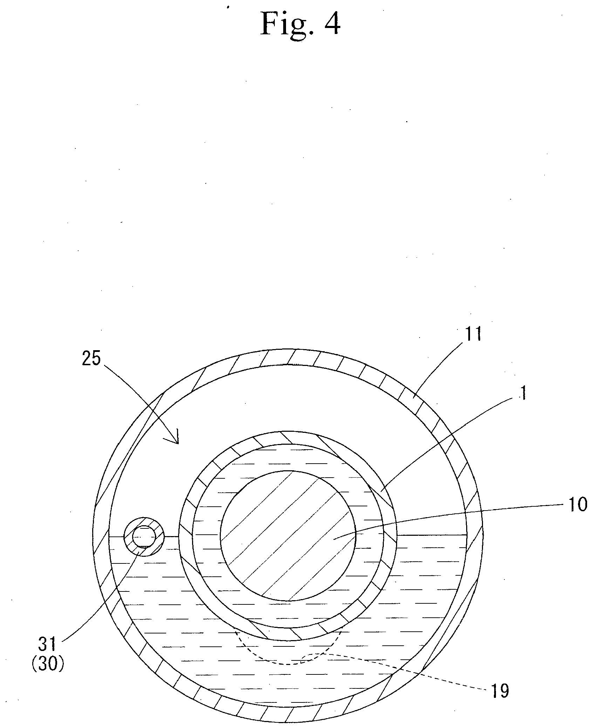

Furthermore, when used as a damper device for the body of railroad vehicle, the cylinder device is disposed so that the central axis of the cylinder 1 is horizontal. The first piping 30 is disposed along the vicinity of the operating oil level in the tank 25, as shown in Fig. 4. As a result, the first piping 30 has a wave dissipating action with regard to waves generated in the operating oil in the tank 25 due to the vibration of the cylinder device. Furthermore, the first communication hole R1 communicating with the first piping 30 is provided at a position circumventing a flow inlet 19 provided in the tank 25 in the first passage T1.

### <Second Embodiment>

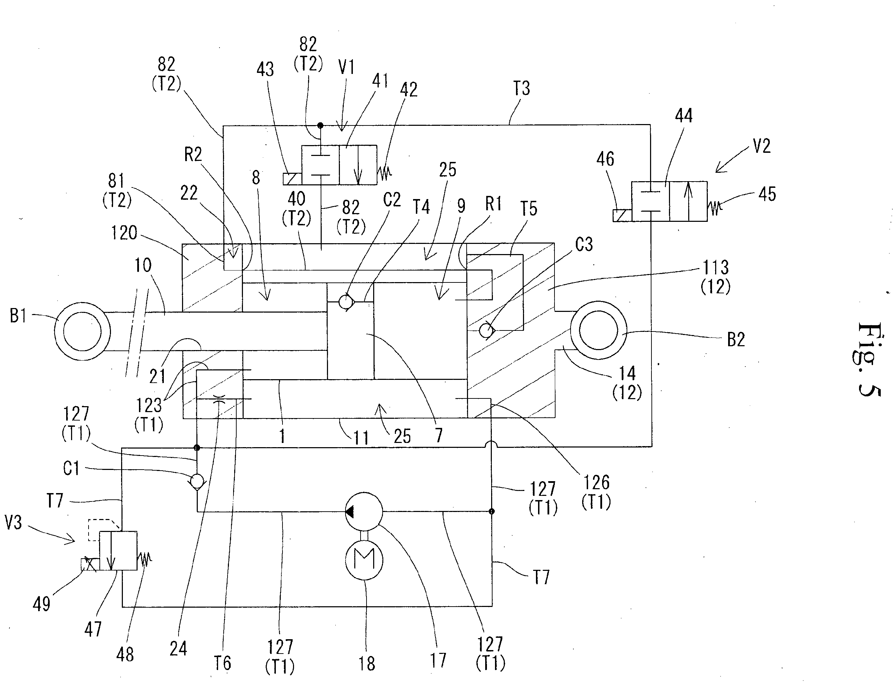

As shown in Fig. 5, the cylinder device of the second embodiment differs from that of the first embodiment in that the cylinder device of the second embodiment has no first piping 30 constituting part of the first passage T1 communicating between the tank 25 and the rod-side chamber 8 and that second piping 40 disposed in the tank 25 constitutes part of the second passage T2 communicating between the piston-side chamber 9 and the tank 25. In the second embodiment, identical parts are labeled by the same reference symbols as those in the first embodiment and a detailed description of these identical parts will be eliminated.

The second piping 40 has the same structure as the first piping 30 in the first embodiment and has a piping body 31, a first insertion member 32 and a second insertion member 33. In the second piping 40, too, one end of the first insertion member 32 is inserted into the first communication hole R1 formed in the cover body 113 of the cover member 12 and the other end of the second insertion member 33 is inserted into the second communication hole R2 formed in the flow passage forming member 22. The second piping 40 is disposed in the tank 25. The second piping 40 constitutes part of the second passage T2.

The first passage T1 communicates between the tank 25 and the rod-side chamber 8. The first passage T1 has an external passage 127 communicating between a passage 126 and a passage 123. The passage 126 communicates with the tank 25 and is formed in the cover body 113 of the cover member 12. The passage 126 has an end communicating with the tank 25. The passage 123 communicates with the rod-side chamber 8 and is open to the outside at the rod guide 120 side. The second passage T2 communicates between the piston-side chamber 9 and the tank 25. The second passage T2 has a part constituted by the second piping 40. The second passage T2 has an external passage 82 communicating between the tank 25 and a passage 81 which communicates with the second communication hole R2 and which is open to the outside at the rod guide 120 side. The discharge passage T7 is connected so as to bypass the pump 17 of the first passage T1 and the first check valve C1.

This cylinder device includes the cylinder 1, the piston 7, the external cylinder 11, the tank 25 and the second piping 40. The piston 7 is slidably inserted into the cylinder 1. The piston 7 divides the interior of the cylinder 1 into the rod-side chamber 8 and the piston-side chamber 9. The external cylinder 11 is disposed outside the cylinder 1 and covers the cylinder 1. The tank 25 is formed in the space between the cylinder 1 and the external cylinder 11 and stores the operating oil. The second piping 40 constitutes part of the second passage T2 through which passes the operating oil supplied to or discharged from the piston-side chamber 9. The second piping 40 has one end to which the first insertion member 32 is coupled and the other end to which the second insertion member 33 is coupled. The one end of the second piping 40 has a larger outer diameter than the other end of the second piping 40. The second piping 40 is disposed in the tank 25.

This cylinder device includes the second piping 40 having the one end to which the first insertion member 32 is coupled and which has a larger outer diameter than the other end thereof to which the second insertion member 33 is coupled. More specifically, the one end of the second piping 40 to which the first insertion member 32 is coupled has a larger pressure-receiving area which receives the pressure from the operating oil filling the second passage T2 part of which the second passage 40 constitutes, than the other end of the second piping 40 to which the second insertion member 33 is coupled. As a result, when the second piping 40 receives pressure of the operating oil in the second passage T2, a force acting from the first insertion member 32 toward the second insertion member 33 prevails, so that the second piping 40 is moved to the second insertion member 33 side. The second piping 40 is maintained in the state where the stepped portion 33A (the abutment portion) of the second insertion member 33 is in abutment against an end surface of the flow passage forming member 22 forming the open end 22A of the second communication hole R2. Thus, since the second piping 40 is not axially reciprocated even when the cylinder device is vibrated, connections between both ends of the second piping 40 and the respective first and second communication holes R1 and R2 can be prevented from damage of watertightness due to wear.

Accordingly, the cylinder device of the second embodiment can be used successfully over a long period of time.

### <Third Embodiment>

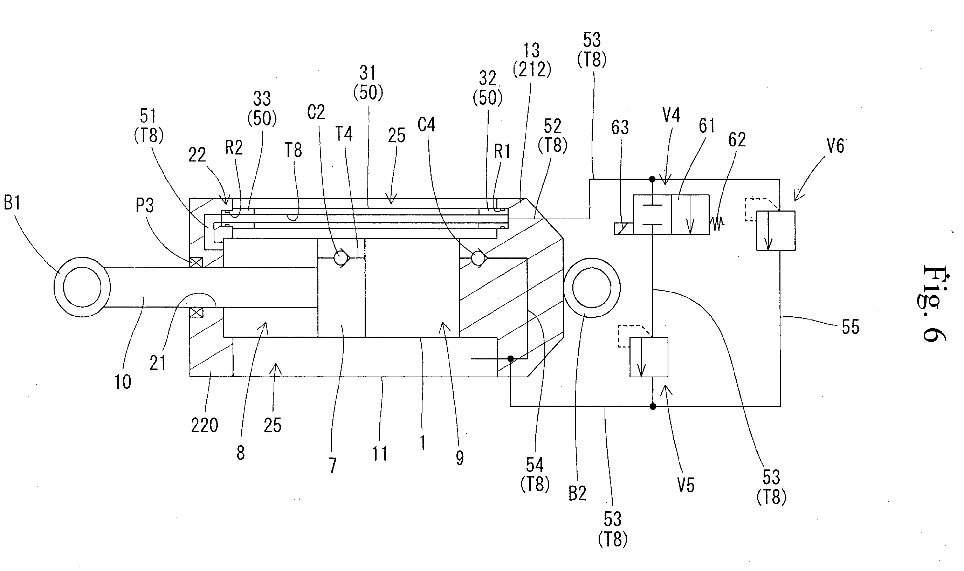

As shown in Fig. 6, a damper embodying the cylinder device of a third embodiment includes the cylinder 1, the piston 7, the piston rod 10, the external cylinder 11, the cover member 212, the rod guide 220, the tank 25, the communication passage T8 and the third piping 50. The cylinder 1, the piston 7, the piston rod 10, the external cylinder 11 and the tank 25 have the same structures as those in the first embodiment respectively. Furthermore, the cover member 212 and the rod guide 220 have the same structures as those in the first embodiment respectively, except for the passages through which the operating oil flows. Furthermore, the third piping 50 has the same structure as the first piping 30 in the first embodiment. In the third embodiment, identical parts are labeled by the same reference symbols as those in the first embodiment and a detailed description of these identical parts will be eliminated.

The communication passage T8 communicates between the rod-side chamber 8 and the piston-side chamber 9. More specifically, the communication passage T8 has a first inner passage 51 communicating between the rod-side chamber 8 and the second communication hole R2, the third piping 50, a second inner passage 52 which communicates with the first communication hole R1 and which is open to the outside, an external passage 53 and a third inner passage 54 which is provided in the cover member 212 so as to communicate with the external passage 53 and which further communicates with the piston-side chamber 9 through the check valve C4. The check valve C4 allows the operating oil to flow from the rod-side chamber 8 toward the piston-side chamber 9 and prevents the operating oil from flowing from the piston-side chamber 9 toward the rod-side chamber 8. The third inner passage 54 diverges thereby to communicate with the tank 25.

The third piping 50 has the same structure as the first piping 30 in the first embodiment and has the piping body 31, the first insertion member 32 and the second insertion member 33. In the third piping 50, too, one end of the first insertion member 32 is inserted into the first communication hole R1 formed in the cover body 13 of the cover member 212, and the other end of the second insertion member 33 is inserted into the second communication hole R2 formed in the flow passage forming member 22. The third piping 50 is disposed in the tank 25. The third piping 50 constitutes part of the communication passage T8.

The external passage 53 has the first on-off valve V4 and the first damping valve V5 provided in this order from the rod-side chamber 8 to the piston-side chamber 9. The first on-off valve V4 is an electromagnetic on-off valve and has a valve 61 opening/closing the external passage 53, a spring 62 imparting an elastic force in a direction such that the valve 61 is opened, and a solenoid 63 imparting a thrust force in a direction such that the valve 61 is closed. This damper has a bypass passage 55 extending around the first on-off valve V4 and the first damping valve V5 to communicate with the external passage 53. The bypass passage 55 is provided with a second damping valve V6.

The first on-off valve V4 is normally kept closed in this damper. When the damper is expanded by an external force, the operating oil in the rod-side chamber 8 is supplied into the cylinder 1 through the communication passage T8, the bypass passage 55 and the second damping valve V6. When the damper is expanded by the external force and the first on-off valve V4 is then opened, the operating oil passes through the first damping valve V5 and the second damping valve V6. As a result, the damping force of the damper can be regulated.

This damper includes the cylinder 1, the piston 7, the external cylinder 11, the tank 25 and the third piping 50. The piston 7 is slidably inserted into the cylinder 1. The piston 7 divides the interior of the cylinder 1 into the rod-side chamber 8 and the piston-side chamber 9. The external cylinder 11 is disposed outside the cylinder 1 and covers the cylinder 1. The tank 25 is formed in the space between the cylinder 1 and the external cylinder 11 and stores the operating oil. The third piping 50 constitutes part of the communication passage T8 through which passes the operating oil supplied to or discharged from the rod-side and piston-side chambers 8 and 9. The third piping 50 has one end to which the first insertion member 32 is coupled and the other end to which the second insertion member 33 is coupled. The one end of the third piping 50 has a larger outer diameter than the other end of the third piping 50. The third piping 50 is disposed in the tank 25.

This damper includes the third piping 50 having the one end which has a larger outer diameter than the other end thereof. More specifically, the end of the third piping 50, to which end the first insertion member 32 is coupled, has a larger pressure-receiving area which receives the pressure from the operating oil filling the communication passage T8 part of which the third passage 50 constitutes, than the end of the third piping 50 to which end the second insertion member 33 is coupled. As a result, when the third piping 50 receives pressure of the operating oil in the communication passage T8, a force acting from the first insertion member 32 toward the second insertion member 33 prevails, so that the third piping 50 is moved to the second insertion member 33 side. The third piping 50 is maintained in the state where the stepped portion 33A (the abutment portion) of the second insertion member 33 is in abutment against an end surface of the flow passage forming member 22 forming the open end 22A of the second communication hole R2. Thus, since the third piping 50 is not axially reciprocated even when the cylinder device is vibrated, connections between both ends of the third piping 50 and the respective first and second communication holes R1 and R2 can be prevented from damage of watertightness due to wear.

Accordingly, the cylinder device of the third embodiment can be used successfully over a long period of time.

The present invention should not be limited by the first to third embodiments described above with reference to the drawings, but the technical scope of the present invention encompasses the following embodiments:
(1) Although the cylinder device and the damper are filled with the operating oil in the first to third embodiments, the cylinder device and the damper may be filled with another liquid.
(2) The cylinder devices of the first and second embodiments and the damper of the third embodiment may be applied to a vibration control device used with equipment other than the body of the railroad vehicle.
(3) In the third embodiment, the first on-off valve may be removed and the second damping valve may be an on-off valve. In this case, the on-off valve is normally kept closed. When an external force expands the damper, the operating oil passes through the first damping valve. When the on-off valve is opened, the operating oil freely passes through the bypass passage.

In an example not covered by the claims, the piping may be formed of only a pipe member having two ends with different outer diameters. Furthermore, an insertion member may be attached to only one of the ends of the piping body, and both ends of the piping body may have different outer diameters.

### Explanation of Reference Symbols

1 ... cylinder, 7 ... piston, 8 ... rod-side chamber, 9 ... piston-side chamber, 10 ... piston rod, 11 ... external cylinder, 12, 112, 212 ... cover member, 17 ... pump, 20, 120, 220 ... rod guide, 21 ... through-hole (of the rod guide), 22 ... flow passage forming member, 25 ... tank, 30 ... first piping (piping), 31 ... piping body, 32, 33 ... insertion member (32 ... first insertion member, 33 ... second insertion member), 33A ... stepped portion (abutting portion) (of the second insertion member), 40 ... second piping (piping), 50 ... third piping (piping), R1 ... first communication hole, R2 ... second communication hole, T1, T2, T8 ... passage (T1 ... first passage, T2 ... second passage, T8 ... communication passage), V1 ... first on-off valve (on-off valve) .

## Claims

1. A cylinder device comprising:
a cylinder (1);
a piston (7) slidably inserted into the cylinder (1) thereby to divide an interior of the cylinder (1) into a rod-side chamber (8) and a piston-side chamber (9);
a piston rod (10) having an end coupled to the piston (7) ;
an external cylinder (11) disposed outside the cylinder (1) and covering the cylinder (1);
a tank (25) formed in a space between the cylinder (1) and the external cylinder (11) and storing an operating fluid;
piping (30, 40, 50) constituting part of a passage (T1, T2, T8) through which the operating fluid passes when the operating fluid is supplied into and discharged from the rod-side chamber (8) or the piston-side chamber (9), the piping (30, 40, 50) being disposed in the tank (25);
a cover member (12, 112, 212) closing one end of the cylinder (1) and one end of the external cylinder (11) and formed with a first communication hole (R1) which is open to an interior of the tank (25) and into which one end of the piping (30, 40, 50) is inserted;
a rod guide (20, 120, 220) which closes the other end of the external cylinder (11) and the other end of the cylinder (1) and into which the piston rod (10) is movably inserted; and
a flow passage forming member (22) provided between the cylinder (1) and the external cylinder (11) and coupled to the rod guide (20, 120, 220), the flow passage forming member (22) being formed with a second communication hole (R2) which is open to the interior of the tank (25) and into which the other end of the piping (30, 40, 50) is inserted,
**characterized in that**:
the piping (30) has a piping body (31) and insertion members (32, 33) respectively coupled to both ends of the piping body (31) ;
the piping (30) has a length shorter than a distance between an inner end surface (13B) of the first communication hole (R1) and an inner end surface (22B) of the second communication hole (R2); and
the insertion member (32) coupled to one end of the piping body (31) has a larger outer diameter than the insertion member (33) coupled to the other end of the piping body (31).

2. The cylinder device according to claim 1, wherein the end of the piping (30) with the smaller outer diameter has an abutting portion (33A) which abuts against the cover member (12, 112, 212) or the flow passage forming member (22).

3. The cylinder device according to claim 1, wherein:
the passage (T1, T2, T8) has a first passage (T1) communicating between the rod-side chamber (8) and the tank (25) ; and
the piping (30) constitutes part of the first passage (T1).

4. The cylinder device according to claim 3, wherein:
the passage (T1, T2, T8) has a second passage (T2) communicating between the piston-side chamber (9) and the tank (25); and
the piping (40) constitutes part of the second passage (T2) .

5. The cylinder device according to claim 3, wherein:
the passage (T1, T2, T8) has a communication passage (T8) communicating between the rod-side chamber (8) and the piston-side chamber (9); and
the piping (50) constitutes part of the communication passage (T8).

6. The cylinder device according to claim 1, wherein the passage (T1, T2, T8) has a first passage (T1) communicating between the rod-side chamber (8) and the tank (25), a second passage (T2) communicating between the piston-side chamber (9) and the tank (25), and a communication passage (T8) communicating between the rod-side chamber (8) and the piston-side chamber (9), the device further comprising:
a pump (17) provided in a middle of the first passage (T1) to supply the operating fluid to the cylinder (1); and
an on-off valve (V1) provided in a middle of the second passage (T2) to open/close the second passage (T2).

## Patentansprüche

1. Zylindervorrichtung, umfassend:
einen Zylinder (1);
einen Kolben (7), der gleitend in den Zylinder (1) eingesetzt ist, um dadurch ein Inneres des Zylinders (1) in eine stangenseitige Kammer (8) und eine kolbenseitige Kammer (9) zu unterteilen;
eine Kolbenstange (10), die ein Ende aufweist, das an den Kolben (7) gekoppelt ist;
einen äußeren Zylinder (11), der außerhalb des Zylinders (1) angeordnet ist und den Zylinder (1) abdeckt;
einen Tank (25), der in einem Raum zwischen dem Zylinder (1) und dem äußeren Zylinder (11) gebildet ist und ein Betriebsfluid lagert;
Verrohrung (30, 40, 50), die einen Teil eines Durchgangs (T1, T2, T8) darstellt, den das Betriebsfluid durchläuft, wenn das Betriebsfluid der stangenseitigen Kammer (8) oder der kolbenseitigen Kammer (9) zugeführt und von dieser abgelassen wird, wobei die Verrohrung (30, 40, 50) im Tank (25) angeordnet ist;
ein Abdeckelement (12, 112, 212), das ein Ende des Zylinders (1) und ein Ende des äußeren Zylinders (11) schließt und mit einer ersten Kommunikationsbohrung (R1) gebildet ist, die zu einem Innenraum des Tanks (25) hin offen ist und in die ein Ende der Verrohrung (30, 40, 50) eingeführt ist;
eine Stangenführung (20, 120, 220), die das andere Ende des äußeren Zylinders (11) und das andere Ende des Zylinders (1) schließt und in die die Kolbenstange (10) beweglich eingeführt ist; und
ein einen Strömungsdurchgang bildendes Element (22), das zwischen dem Zylinder (1) und dem äußeren Zylinder (11) vorgesehen ist und mit der Stangenführung (20, 120, 220) gekoppelt ist, wobei das den Strömungsdurchgang bildende Element (22) mit einer zweiten Kommunikationsbohrung (R2) gebildet ist, die zu dem Innenraum des Tanks (25) hin offen ist und in das das andere Ende der Verrohrung (30, 40, 50) eingeführt ist,
**dadurch gekennzeichnet, dass**:
die Verrohrung (30) einen Verrohrungskörper (31) und Einführelemente (32, 33) aufweist, die jeweils mit beiden Enden des Verrohrungskörpers (31) gekoppelt sind;
die Verrohrung (30) eine Länge aufweist, die kürzer ist als ein Abstand zwischen einer inneren Endfläche (13B) der ersten Kommunikationsbohrung (R1) und einer inneren Endfläche (22B) der zweiten Kommunikationsbohrung (R2); und
das Einführelement (32), das mit einem Ende des Verrohrungskörpers (31) gekoppelt ist, einen größeren Außendurchmesser aufweist als das Einführelement (33), das mit dem anderen Ende des Verrohrungskörpers (31) gekoppelt ist.

2. Zylindervorrichtung nach Anspruch 1, wobei das Ende der Verrohrung (30) mit dem kleineren Außendurchmesser einen Anlageabschnitt (33A) aufweist, der an dem Abdeckelement (12, 112, 212) oder dem den Strömungsdurchgang bildenden Element (22) anliegt.

3. Zylindervorrichtung nach Anspruch 1, wobei:
der Durchgang (T1, T2, T8) einen ersten Durchgang (T1) aufweist, der in Kommunikation mit der stangenseitigen Kammer (8) und dem Tank (25) ist; und
die Verrohrung (30) einen Teil des ersten Durchgangs (T1) darstellt.

4. Zylindervorrichtung nach Anspruch 3, wobei:
der Durchgang (T1, T2, T8) einen zweiten Durchgang (T2) aufweist, der in Kommunikation mit der kolbenseitigen Kammer (9) und dem Tank (25) ist; und
die Verrohrung (40) einen Teil des zweiten Durchgangs (T2) darstellt.

5. Zylindervorrichtung nach Anspruch 3, wobei:
der Durchgang (T1, T2, T8) einen Kommunikationsdurchgang (T8) aufweist, der in Kommunikation mit der stangenseitigen Kammer (8) und der kolbenseitigen Kammer (9) ist; und
die Verrohrung (50) einen Teil des Kommunikationsdurchgangs (T8) darstellt.

6. Zylindervorrichtung nach Anspruch 1, wobei der Durchgang (T1, T2, T8) einen ersten Durchgang (T1), der in Kommunikation mit der stangenseitigen Kammer (8) und dem Tank (25) ist, einen zweiten Durchgang (T2), der in Kommunikation mit der kolbenseitigen Kammer (9) und dem Tank (25) ist, und einen Kommunikationsdurchgang (T8), der in Kommunikation mit der stangenseitigen Kammer (8) und der kolbenseitigen Kammer (9) ist, aufweist, wobei die Vorrichtung weiter umfasst:
eine Pumpe (17), die in der Mitte des ersten Durchgangs (T1) vorgesehen ist, um das Betriebsfluid dem Zylinder (1) zuzuführen; und
ein Schaltventil (V1), das in der Mitte des zweiten Durchgangs (T2) vorgesehen ist, um den zweiten Durchgang (T2) zu öffnen bzw. zu schließen.

## Revendications

1. Dispositif de cylindre comportant :
un cylindre (1) ;
un piston (7) inséré coulissant dans le cylindre (1), pour ainsi diviser un intérieur du cylindre (1) en une chambre côté tige (8) et une chambre côté piston (9) ;
une tige de piston (10) ayant une extrémité accouplée au piston (7) ;
un cylindre externe (11) disposé à l'extérieur du cylindre (1) et recouvrant le cylindre (1) ;
un réservoir (25) constitué dans un espace entre le cylindre (1) et le cylindre externe (11) et stockant un fluide de travail ;
des conduites (30, 40, 50) constituant une partie d'un passage (T1, T2, T8) à travers lequel passe le fluide de travail lorsque le fluide de travail est apporté dans la chambre côté tige (8) ou la chambre côté piston (9) et évacué de celle-ci, les conduites (30, 40, 50) étant disposées dans le réservoir (25) ;
un élément capot (12, 112, 212) fermant une extrémité du cylindre (1) et une extrémité du cylindre externe (11) et constitué avec un premier trou de communication (R1) qui est ouvert sur un intérieur du réservoir (25) et dans lequel est insérée une extrémité des conduites (30, 40, 50) ;
un guide de tige (20, 120, 220) qui ferme l'autre extrémité du cylindre externe (11) et l'autre extrémité du cylindre (1) et dans lequel la tige de piston (10) est insérée mobile ; et
un élément formant passage d'écoulement (22) prévu entre le cylindre (1) et le cylindre externe (11) et accouplé au guide de tige (20, 120, 220), l'élément formant passage d'écoulement (22) étant constitué avec un second trou de communication (R2) qui est ouvert sur l'intérieur du réservoir (25) et dans lequel est insérée l'autre extrémité des conduites (30, 40, 50),
**caractérisé en ce que** :
les conduites (30) ont un corps de conduites (31) et des éléments d'insertion (32, 33) accouplés respectivement aux deux extrémités du corps de conduites (31) ;
les conduites (30) ont une longueur plus courte qu'une distance entre une surface d'extrémité interne (13B) du premier trou de communication (R1) et une surface d'extrémité interne (22B) du second trou de communication (R2) ; et
l'élément d'insertion (32) accouplé à une extrémité du corps de conduites (31) a un diamètre extérieur plus grand que l'élément d'insertion (33) accouplé à l'autre extrémité du corps de conduites (31).

2. Dispositif de cylindre selon la revendication 1, dans lequel l'extrémité des conduites (30) avec le diamètre extérieur inférieur a une portion de butée (33A) qui bute contre l'élément capot (12, 112, 212) ou l'élément formant passage d'écoulement (22).

3. Dispositif de cylindre selon la revendication 1, dans lequel :
le passage (T1, T2, T8) a un premier passage (T1) communiquant entre la chambre côté tige (8) et le réservoir (25) ; et
les conduites (30) font partie du premier passage (T1).

4. Dispositif de cylindre selon la revendication 3, dans lequel :
le passage (T1, T2, T8) a un second passage (T2) communiquant entre la chambre côté piston (9) et le réservoir (25) ; et
les conduites (40) font partie du second passage (T2).

5. Dispositif de cylindre selon la revendication 3, dans lequel :
le passage (T1, T2, T8) a un passage de communication (T8) communiquant entre la chambre côté tige (8) et la chambre côté piston (9) ; et
les conduites (50) font partie du passage de communication (T8).

6. Dispositif de cylindre selon la revendication 1, dans lequel le passage (T1, T2, T8) a un premier passage (T1) communiquant entre la chambre côté tige (8) et le réservoir (25), un second passage (T2) communiquant entre la chambre côté piston (9) et le réservoir (25) et un passage de communication (T8) communiquant entre la chambre côté tige (8) et la chambre côté piston (9), le dispositif comportant en outre :
une pompe (17) prévue dans un milieu du premier passage (T1) afin de fournir le fluide de travail au cylindre (1) ; et
une vanne de marche-arrêt (VI) prévue dans un milieu du second passage (T2) afin d'ouvrir/fermer le second passage (T2).
